(19) Europäisches Patentamt
European Patent Office
Office européen des brevets

(11) **EP 4 387 251 A1**

(12) **EUROPEAN PATENT APPLICATION**
published in accordance with Art. 153(4) EPC

(43) Date of publication:
**19.06.2024 Bulletin 2024/25**

(21) Application number: **22866391.0**

(22) Date of filing: **22.08.2022**

(51) International Patent Classification (IPC):
**H04N 23/60** (2023.01)

(52) Cooperative Patent Classification (CPC):
**H04N 23/71; H04N 17/002; H04N 23/69;
H04N 23/75**

(86) International application number:
**PCT/CN2022/113963**

(87) International publication number:
**WO 2023/035919 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.09.2021 CN 202111073455**

(71) Applicant: **Huawei Technologies Co., Ltd.
Shenzhen, Guangdong 518129 (CN)**

(72) Inventors:
• **LU, Yan**
 **Shenzhen, Guangdong 518129 (CN)**
• **MA, Qiang**
 **Shenzhen, Guangdong 518129 (CN)**
• **SUN, Pengfei**
 **Shenzhen, Guangdong 518129 (CN)**
• **ZHA, Yufeng**
 **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **METHOD AND APPARATUS FOR CONTROLLING EXPOSURE, AND ELECTRONIC DEVICE**

(57) This application provides an exposure control method, an apparatus, and an electronic device. For a camera module with a variable aperture, a luminance level of a shooting environment is determined based on a current f-number, an exposure time corresponding to a current frame of image, a luminance value of the current frame of image, a gain corresponding to the current frame of image, a calibration value of photosensitivity of the camera module, and a corresponding image luminance value when the photosensitivity of the camera module is calibrated. A target luminance value is determined based on the luminance level of the shooting environment. Then the luminance value of the current frame of image is converged toward the target luminance value. According to the method, when the aperture is changed, luminance of an image seen by a user is always stable, thereby improving visual experience of the user.

200

```
┌──────────────────────────────────────────────┐
│         Obtain a current frame of image        │──── Step 201
└──────────────────────────────────────────────┘
                       │
┌──────────────────────────────────────────────┐
│ Determine a current f-number of a camera       │
│ module, and determine a luminance value of     │──── Step 202
│ the current frame of image                     │
└──────────────────────────────────────────────┘
                       │
┌──────────────────────────────────────────────┐
│ Determine a luminance level of a shooting      │
│ environment based on the current f-number, an  │
│ exposure time corresponding to the current     │
│ frame of image, the luminance value of the     │
│ current frame of image, a gain corresponding   │──── Step 203
│ to the current frame of image, a calibration   │
│ value of photosensitivity of the camera        │
│ module, and a corresponding image luminance    │
│ value when the photosensitivity of the camera  │
│ module is calibrated                           │
└──────────────────────────────────────────────┘
                       │
┌──────────────────────────────────────────────┐
│ Determine a target luminance value based on    │
│ the luminance level of the shooting            │──── Step 204
│ environment                                    │
└──────────────────────────────────────────────┘
                       │
┌──────────────────────────────────────────────┐
│ When the luminance value of the current frame  │
│ image is not equal to the target luminance     │
│ value, converge the luminance value of the     │──── Step 205
│ current frame of image toward the target       │
│ luminance value                                │
└──────────────────────────────────────────────┘
```

FIG. 2

**Description**

This application claims priority to Chinese Patent Application No. 202111073455.2, filed with the China National Intellectual Property Administration on September 13, 2021 and entitled "EXPOSURE CONTROL METHOD, APPARATUS, AND ELECTRONIC DEVICE", which is incorporated herein by reference in its entirety.

**TECHNICAL FIELD**

This application relates to the terminal field, and more specifically, to an exposure control method, an apparatus, and an electronic device in the terminal field.

**BACKGROUND**

Currently, there is a camera module with a variable aperture. When the aperture is changed, an amount of light entering the camera module also is changed accordingly. In this case, as the amount of light entering the camera module is changed, luminance of a displayed image is unstable, affecting visual experience of a user.

**SUMMARY**

Embodiments of this application provide an exposure control method, an apparatus, and an electronic device. According to the method, when an aperture is changed, luminance of an image seen by a user is always stable, thereby improving visual experience of the user.

According to a first aspect, an exposure control method is provided. The method is applied to a camera module with a variable aperture.

The method includes: obtaining a current frame of image; determining a current f-number of the camera module, and determining a luminance value of the current frame of image; determining a luminance level of a shooting environment based on the current f-number, an exposure time corresponding to the current frame of image, the luminance value of the current frame of image, a gain corresponding to the current frame of image, a calibration value of photosensitivity of the camera module, and a corresponding image luminance value when the photosensitivity of the camera module is calibrated; determining a target luminance value based on the luminance level of the shooting environment; and when the luminance value of the current frame of image is not equal to the target luminance value, converging the luminance value of the current frame of image toward the target luminance value.

According to the foregoing technical solution, when the aperture is changed, the luminance level, of the shooting environment, that is determined based on the current f-number, the exposure time corresponding to the current frame of image, the luminance value of the current frame of image, the gain corresponding to the current frame of image, the calibration value of the photosensitivity of the camera module, and the image corresponding luminance value when the photosensitivity of the camera module is calibrated is always consistent, so that when the aperture is changed, the target luminance value determined based on the luminance level of the shooting environment is always consistent. Therefore, when the aperture is changed, luminance of an image seen by a user is always stable, thereby improving visual experience of the user.

With reference to the first aspect, in some implementations of the first aspect, the determining a current f-number of the camera module includes: obtaining a current zoom ratio of the camera module; and determining the current f-number of the camera module based on the current zoom ratio of the camera module.

According to the foregoing technical solution, the f-number of the camera module is changed with the zoom ratio. In other words, there is a correspondence between the current f-number of the camera module and the current zoom ratio of the camera module. Based on the current zoom ratio of the camera module, the current f-number of a camera may be determined by obtaining the current zoom ratio of the camera.

With reference to the first aspect and the foregoing implementations, in some implementations of the first aspect, the determining the current f-number of the camera module based on the current zoom ratio of the camera module includes: obtaining a correspondence between a plurality of zoom ratios and a plurality of f-numbers, where the plurality of zoom ratios include the current zoom ratio; and determining an f-number corresponding to the current zoom ratio as the current f-number.

According to the foregoing technical solution, the correspondence between the plurality of zoom ratios and the plurality of f-numbers is obtained, so that the f-number corresponding to the current zoom ratio is determined as the current f-number.

With reference to the first aspect and the foregoing implementations, in some implementations of the first aspect, the plurality off-numbers are obtained after the camera module traverses the plurality of zoom ratios under uniform illumination and preset luminance, and an absolute value of a difference between any one of the plurality of f-numbers and a design f-number of an aperture corresponding to the f-number is less than or equal to a preset threshold.

According to the foregoing technical solution, the camera module sequentially traverses the plurality of zoom ratios under uniform illumination of specific luminance, to obtain a plurality of calibration f-numbers of an aperture, and make an absolute value of a difference between the calibration f-number and a design f-number less than or equal to a preset threshold. The calibration f-number of the aperture is determined after an aperture of the camera module is calibrated in practice. Compared with an aperture design f-number, the aperture calibration f-number can better reflect a true f-number of the aperture in practice, and the difference value between the calibration f-number and the design f-number is within a preset range. Therefore, in a user use phase, when the luminance level of the shooting environment is determined based on the calibration f-number, the determined luminance level of the shooting environment can be closer to an actual luminance level of the shooting environment.

With reference to the first aspect and the foregoing implementations, in some implementations of the first aspect, the determining a target luminance value based on the luminance level of the shooting environment includes: obtaining a correspondence between a plurality of luminance levels of the shooting environment and a plurality of luminance values of the image, where the plurality of luminance levels of the shooting environment include the luminance level of the shooting environment; and determining the target luminance value based on an image luminance value corresponding to the luminance level of the shooting environment.

According to the foregoing technical solution, in a research and development phase, the research and development personnel can match a corresponding image luminance value for each luminance level corresponding to the shooting environment based on experience, to generate a correspondence between the luminance level of the shooting environment and the image luminance value. In a shooting phase of using a camera application by the user, if a luminance value of an image displayed to the user is determined based on the luminance level of the shooting environment and the foregoing correspondence, luminance of the image is comfortable for the user's eyes. In other words, the luminance of the image displayed to the user does not make the user feel too bright or too dark.

With reference to the first aspect and the foregoing implementations, in some implementations of the first aspect, the determining the target luminance value based on an image luminance value corresponding to the luminance level of the shooting environment includes: determining the image luminance value corresponding to the luminance level of the shooting environment as the target luminance value.

With reference to the first aspect and the foregoing implementations, in some implementations of the first aspect, the determining the target luminance value based on an image luminance value corresponding to the luminance level of the shooting environment includes: determining a correction factor based on a grayscale histogram of the current frame of image; correcting, based on the correction factor, the image luminance value corresponding to the luminance level of the shooting environment; and determining a corrected image luminance value as the target luminance value.

According to the foregoing technical solution, the correction factor is determined based on the grayscale histogram of the current frame of image, and the image luminance value corresponding to the luminance level of the shooting environment is corrected by using the correction factor. The corrected image luminance value is determined as the target luminance value. Consequently, this improves flexibility of determining the target luminance value based on the luminance level of the shooting environment.

According to a second aspect, this application provides an apparatus. The apparatus is included in an electronic device, and the apparatus has a function of implementing behavior of the electronic device in the foregoing aspect and the possible implementations of the foregoing aspect. The function may be implemented by hardware, or may be implemented by hardware by executing corresponding software. The hardware or software includes one or more modules or units corresponding to the foregoing function, for example, an obtaining module or unit and a processing module or unit.

According to a third aspect, this application provides an electronic device. The electronic device includes a camera module, one or more processors, a memory, a plurality of application programs, and one or more computer programs. The one or more computer programs are stored in the memory, and the one or more computer programs include instructions. When the instructions are executed by the electronic device, the electronic device is enabled to perform the exposure control method in any possible implementation of any one of the foregoing aspects.

According to a fourth aspect, this application provides an electronic device. The electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the exposure control method according to any possible implementation of any one of the foregoing aspects.

According to a fifth aspect, this application provides a computer-readable storage medium, including computer instructions. When the computer instructions are run on an electronic device, the electronic device is enabled to perform the video play method according to any possible implementation of any one of the foregoing aspects.

According to a sixth aspect, this application provides a computer program product. When the computer program product runs on an electronic device, the electronic device is enabled to perform the exposure control method according to any possible implementation of any one of the foregoing aspects.

**BRIEF DESCRIPTION OF DRAWINGS**

FIG. 1 is a schematic diagram of a structure of an example of an electronic device according to an embodiment of this application;
FIG. 2 is a schematic flowchart of an exposure control method according to an embodiment of this application;
FIG. 3 is a schematic diagram of an example of a graphical user interface for adjusting a zoom ratio according to an embodiment of this application;
FIG. 4 is a schematic diagram of a correspondence between calibration f-numbers of an aperture at zoom ratios and zoom ratios, and a value relationship between a calibration f-number of the aperture and a design f-number at a same zoom ratio according to an embodiment of this application; and
FIG. 5 is a schematic diagram of a correspondence between a luminance level of a shooting environment and luminance of an image according to an embodiment of this application.

**DESCRIPTION OF EMBODIMENTS**

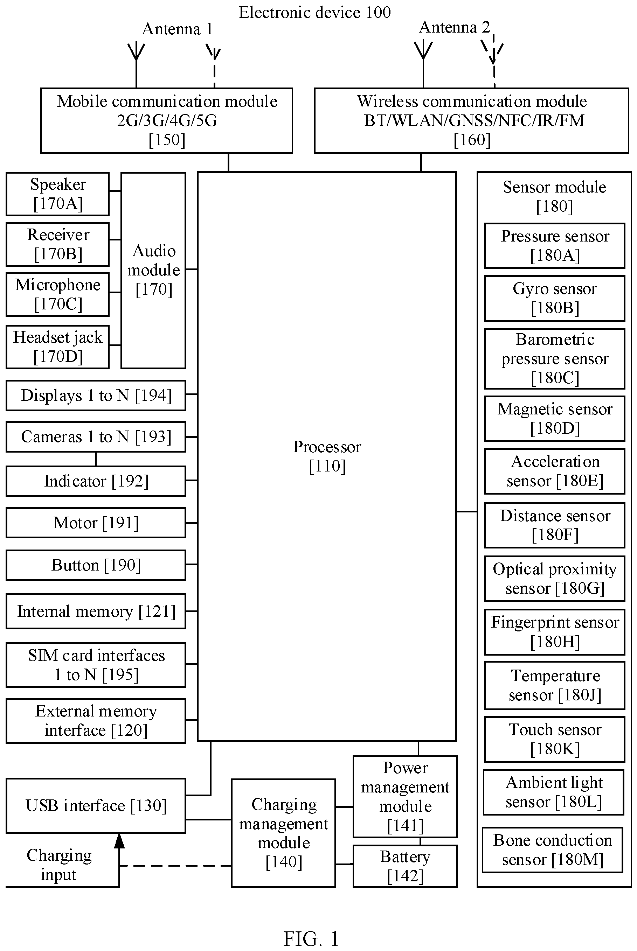

The following describes technical solutions of embodiments in this application with reference to accompanying drawings.
Currently, there is a camera module with a variable aperture. For example, the aperture may change with a zoom ratio. In other words, when a zoom ratio of the camera module is changed, the aperture of the camera module also is changed accordingly. An advantage of the camera module is that: For a low zoom ratio, a wide aperture may be used to implement less noise and higher definition for an image; and for a high zoom ratio, a small aperture may be used to obtain a larger depth of field.
However, when the aperture is changed, an amount of light entering the camera module also is changed. In this case, as the amount of light entering the camera module is changed, luminance of an image obtained by using the camera module is unstable. This affects visual experience of a user.
In view of this, an embodiment of this application provides an exposure control method. The method can keep luminance of a current frame of image stable when the aperture is changed.
The exposure control method provided in this embodiment of this application may be applied to an electronic device having a shooting function like a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application. It should be understood that an aperture of a variable size is installed on the electronic device in embodiments of this application.
For example, FIG. 1 is a schematic diagram of a structure of an electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.
It may be understood that, the structure shown in this embodiment of this application constitutes no specific limitation on the electronic device 100. In some other embodiments of this application, the electronic device 100 may include more or fewer components than those shown in the figure, some components may be combined, or some components may be split, or have different component arrangements. The components shown in the figure may be implemented by hardware, software, or a combination of software and hardware.
The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus. The processor 110 may be coupled to the touch sensor 180K by using the I2C interface, so that the processor 110 communicates with the touch sensor 180K by using the I2C bus interface, to implement a touch function of the electronic device 100. The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 by using the DSI interface, to implement a display function of the electronic device 100.

It may be understood that, an interface connection relationship between the modules shown in this embodiment of this application is merely an example for description, and does not constitute a limitation on the structure of the electronic device 100. In some other embodiments of this application, the electronic device 100 may alternatively use an interface connection manner different from an interface connection manner in the foregoing embodiment, or use a combination of a plurality of interface connection manners.

The charging management module 140 is configured to receive a charging input from a charger. The charger may be a wireless charger or a wired charger. The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

The electronic device 100 implements the display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194. N is a positive integer greater than 1.

The electronic device 100 may implement the shooting function by using the ISP, the camera 193, the video codec, the GPU, the display 194, and the application processor, for example, a process of controlling exposure described in embodiments of this application.

The ISP may be configured to process data fed back by the camera 193. For example, during image shooting, a shutter is pressed, and light is transmitted to a photosensitive element of the camera through a camera module. An optical signal is converted into an electrical signal. The photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a shooting scenario. In some embodiments, the ISP may be disposed in the camera 193.

The camera 193 is configured to capture a static image or a video. An optical image of an object is generated through the camera module, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format like RGB or YUV. It should be understood that, in descriptions of this embodiment of this application, an image in the RGB format is used as an example for description. An image format is not limited in embodiments of this application. In some embodiments, the electronic device 100 may include one or N cameras 193. N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The external memory interface 120 may be configured to connect to an external storage card, for example, a micro SD card, to extend a storage capability of the electronic device 100. The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area.

The electronic device 100 may implement an audio function like music playing or recording by using the audio module 170, the speaker 170A, the receiver 170B, the microphone 170C, the headset jack 170D, the application processor, and the like.

The pressure sensor 180A is configured to sense a pressure signal, and may convert the pressure signal into an electrical signal. The gyroscope sensor 180B may be configured to determine a motion posture of the electronic device 100. The barometric pressure sensor 180C is configured to measure barometric pressure. The magnetic sensor 180D includes a Hall sensor. The electronic device 100 may detect opening and closing of a flip cover through the magnetic sensor 180D. The acceleration sensor 180E may detect magnitudes of accelerations of the electronic device 100 in all directions (usually on three axes). The distance sensor 180F is configured to measure a distance. The electronic device 100 may measure a distance in an infrared manner or a laser manner. In some embodiments, the electronic device 100 may measure a distance in the shooting scenario through the distance sensor 180F, to implement quick focusing. The optical proximity sensor 180G may include, for example, a light-emitting diode (LED) and an optical detector, for example, a photodiode. The ambient light sensor 180L is configured to sense ambient light luminance. The electronic device 100 may adaptively adjust luminance of the display 194 based on the sensed ambient light luminance. The ambient light sensor 180L may also be configured to automatically adjust a white balance during shooting. The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like. The temperature sensor 180J is configured to detect a temperature. The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The bone conduction sensor 180M may obtain a vibration signal. The audio module 170 may obtain a voice signal through parsing based on the vibration signal that is of the vibration bone of the vocal-cord part and that is obtained by the bone conduction sensor 180M, to implement a voice function.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt or a touch vibration feedback. For example, touch operations performed on different applications (for example, shooting and audio playback) may correspond to different vibration feedback effect. For touch operations performed on different areas of the display 194, the motor 191 may also correspond to different vibration feedback effect. The indicator 192 may be an indicator light, and may indicate a charging status and a power change, or may indicate a message, a missed call, a notification, and the like. The SIM card interface 195 is configured to connect to a SIM card.

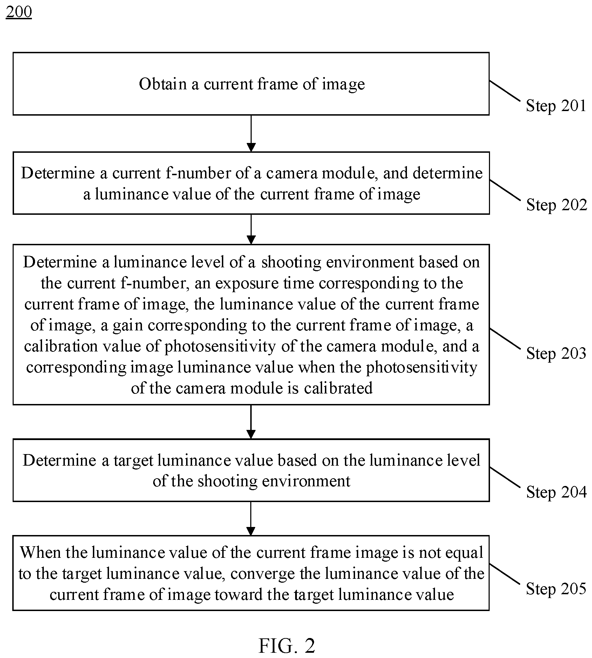

The following describes embodiments of this application by using a mobile phone having the structure shown in FIG. 1 as an example. FIG. 2 is a schematic block diagram of an exposure control method 200. The method includes at least the following steps.

Step 201: Obtain a current frame of image.

When a user needs to use a camera function of a mobile phone, the user may start a camera application program (application, App) installed on the mobile phone. The camera application program is a "camera application" for short below. After the camera application is started, the mobile phone obtains the current frame of image through a camera module.

Step 202: Determine a current f-number of the camera module, and determine a luminance value of the current frame of image.

After obtaining the current frame of image, the mobile phone determines the luminance value of the current frame of image based on the current frame of image, and determines the current f-number of the camera module. For example, the mobile phone may determine an average value of luminance of all pixels in the current frame of image, and determine the average value of the luminance as the luminance value of the current frame of image.

When obtaining the current f-number, the mobile phone may first obtain a current zoom ratio of the camera module, and determine the current f-number based on the current zoom ratio. For example, the mobile phone may obtain a preconfigured correspondence between a plurality of zoom ratios and a plurality off-numbers. After obtaining the current zoom ratio, the mobile phone may determine an f-number that is in the plurality of f-numbers and that corresponds to the current zoom ratio as the current f-number.

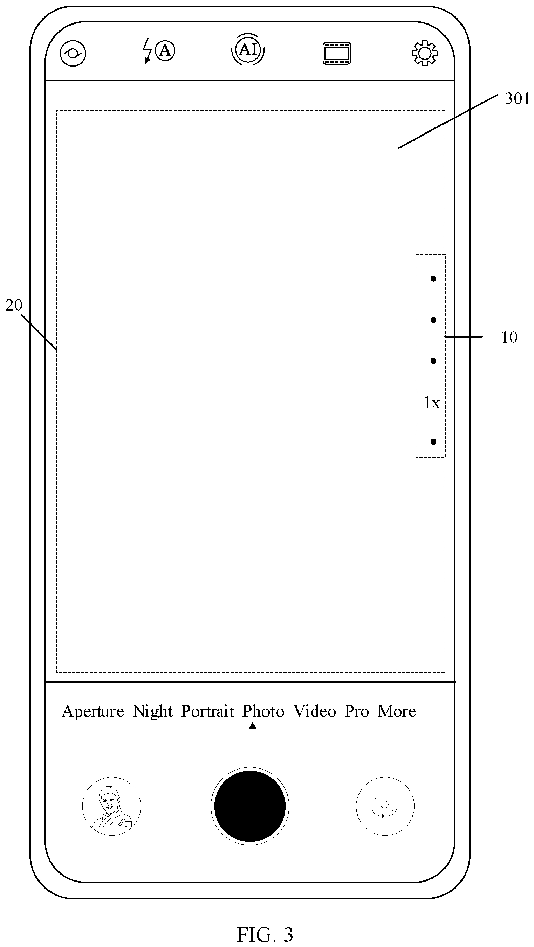

The foregoing plurality of f-numbers may be calibration f-numbers determined after an aperture of the camera module is calibrated before the mobile phone is delivered from a factory. For example, the camera module sequentially traverses the plurality of zoom ratios under uniform illumination of specific luminance. For example, when the f-number is calibrated, the camera application on the mobile phone is started. After the camera application is started, a preview interface is displayed. The preview interface may be an interface 301 shown in FIG. 3. The interface 301 may include a plurality of menu areas, and each area includes different buttons that are respectively used to implement various different functions of the camera application.

As shown in FIG. 3, the interface 301 includes a top menu area, a zoom ratio adjustment area 10, an image preview display area 20, and a bottom menu area. It should be understood that, for ease of description, in this embodiment of this application, the areas of the interface 301 is divided as shown in a dashed-line box in the figure.

When the aperture is calibrated, a zoom ratio of the camera module may be manually selected in the zoom ratio adjustment area 10 in FIG. 3, each f-number of the camera module at each zoom ratio is recorded, and the f-number is determined as a calibration f-number of an aperture.

To ensure accuracy of the calibration f-number of the aperture, a calibration f-number of an aperture and a design f-number of the aperture that correspond to a same zoom ratio may be compared. If an absolute value of a difference between the calibration f-number and the design f-number is less than or equal to a preset threshold, for example, the preset threshold may be 0.1, the calibration f-number is determined as an f-number corresponding to the zoom ratio. If the absolute value of the difference between the calibration f-number and the design f-number is greater than or equal to the preset threshold, calibration may be performed again, until the absolute value of the difference between the calibration f-number and the design f-number is less than or equal to the preset threshold.

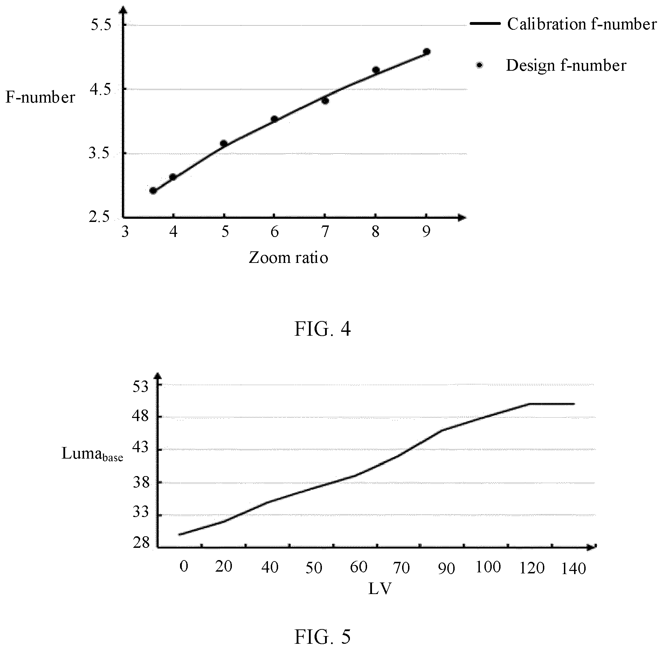

For example, a finally determined correspondence between a calibration f-number of an aperture at each zoom ratio and a zoom ratio, and a value relationship between the calibration f-number and the design f-number of the aperture at the same zoom ratio may be shown in FIG. 4.

The calibration f-number of the aperture is determined after an aperture of the camera module is calibrated in practice. Compared with the design f-number of the aperture, the calibration f-number can better reflect a real f-number of the aperture in practice, and a difference between the calibration f-number and the design f-number is within a preset range. Therefore, in a user use phase, when a luminance level of a shooting environment is determined based on the calibration f-number, the determined luminance level of the shooting environment can be closer to an actual luminance level of the shooting environment.

Step 203: Determine the luminance level of the shooting environment based on the current f-number, an exposure time corresponding to the current frame of image, the luminance value of the current frame of image, a gain corresponding to the current frame of image, a calibration value of photosensitivity of the camera module, and a corresponding image luminance value when the photosensitivity of the camera module is calibrated.

For example, the luminance level of the shooting environment may be determined according to the following relational expression:

$$LV = \log_2\left( Fn^2 \times \frac{1}{t} \times \frac{100}{p_{calibration} \times g} \times \frac{Luma_1}{Luma_2} \right) \quad (1)$$

LV represents the luminance level of the shooting environment, $Luma_1$ represents the luminance value of the current frame of image, Fn represents the current f-number, t represents the exposure time corresponding to the current frame of image, g represents the gain corresponding to the current frame of image, and $P_{calibration}$ represents the calibration value of the photosensitivity of the camera module. For example, a process of calibrating the photosensitivity of the camera module may be as follows:

In a research and development phase, the luminance level of the shooting environment may be set to a preset luminance level, and an image luminance value corresponding to the preset luminance level is determined. Herein, the image luminance value corresponding to the preset luminance level is $Luma_2$. When the image luminance value obtained through the camera module reaches $Luma_2$, photosensitivity of the camera module at this time is denoted as $P_{calibration}$, and is used as photosensitivity of the camera module at 1x gain. For a method for determining the image luminance value corresponding to the preset luminance level, refer to related descriptions in the following.

According to the foregoing relational expression (1), when the shooting environment is fixed, no matter how the f-number is changed, a luminance level, of the shooting environment, that is determined by using the relational expression (1) is consistent with a luminance level of the shooting environment before the f-number is changed. For example, it is assumed that the current frame of image is obtained after the zoom ratio decreases. The zoom ratio decreases, so that the f-number of the camera module is doubled. In this case, an amount of light entering the camera module is reduced by half. Correspondingly, the luminance value of the current frame of image obtained by the camera module is correspondingly reduced by half. In this case, when the luminance level of the shooting environment is determined by using the relational expression (1), because a change of the f-number and a change of the luminance value of the current frame of image cancel each other out, when only the zoom ratio is changed, the luminance level, of the shooting environment, that is determined by using the relational expression (1) is consistent with a luminance level of the shooting environment before the zoom ratio decreases.

For example, it is assumed that before the zoom ratio decreases, the f-number $Fn^2=2$, and in this case, the image luminance value is 100. After the zoom ratio decreases, the f-number $Fn^2=4$, and in this case, the amount of light entering the camera module is reduced by half. Correspondingly, after the zoom ratio decreases, the luminance value of the current frame of image obtained by the camera module is 50. It may be seen that, when only the zoom ratio is changed, the luminance level, of the shooting environment, that is determined by using the relational expression (1) is consistent with the luminance level of the shooting environment before the zoom ratio decreases.

Step 204: Determine a target luminance value based on the luminance level of the shooting environment.

After the luminance level of the shooting environment is obtained according to the relational expression (1), the target luminance may be determined based on the luminance level of the shooting environment. For example, a target luminance value corresponding to the luminance level of the shooting environment may be determined based on a preconfigured correspondence between the luminance level of the shooting environment and the image luminance value. The correspondence between the luminance level of the shooting environment and the image luminance value may be shown in FIG. 5.

In an implementation, the image luminance value corresponding to the luminance level of the shooting environment may be determined as the target luminance value based on FIG. 5.

In another implementation, the image luminance value corresponding to the luminance level of the shooting environment may be corrected, and a corrected image luminance value is determined as the target luminance value.

For example, an overexposed degree or an underexposed degree of the current frame of image may be determined based on a grayscale histogram of the current frame of image. A correction factor $\mu$ is determined based on the overexposed degree or the underexposed degree. The correction factor $\mu$ is used to correct the image luminance value corresponding to the luminance level of the shooting environment, and the corrected image luminance value is determined as the target luminance value.

For example, the image luminance value corresponding to the luminance level of the shooting environment may be corrected by using the following relational expression:

$$Luma_3 = \mu \times Luma_{base} \tag{2}$$

$Luma_3$ is the target luminance value, and $Luma_{base}$ is the image luminance value corresponding to the luminance level of the shooting environment. If the current frame of image is in an overexposed state, $\mu$ is greater than 0 and less than 1; or if the current frame of image is in an underexposed state, $\mu$ is greater than 1.

It is assumed that the luminance level, of the shooting environment, that is determined according to the relational expression (1) is 10, and based on FIG. 5, it may be determined that the image luminance value corresponding to the luminance level of the shooting environment is 30. In an implementation, the luminance value 30 is determined as the target luminance value. In another implementation, the luminance value 30 is corrected by using the relational expression (2). It is assumed that the current frame of image is in the overexposed state, and a value of $\mu$ is determined as 0.8 based on the overexposed degree of the current frame of image. Therefore, a target luminance value determined according to the relational expression (2) is 24.

The preconfigured correspondence between the luminance level of the shooting environment and the image luminance value may be generated in the following manner:

For example, in the research and development stage, the research and development personnel can match a corresponding image luminance value for each luminance level corresponding to the shooting environment based on experience, to generate the correspondence between the luminance level of the shooting environment and the image luminance value. In a shooting phase of using a camera application by the user, if a luminance value of an image displayed to the user is determined based on the luminance level of the shooting environment and the foregoing correspondence, luminance of the image is comfortable for the user's eyes. In other words, the luminance of the image displayed to the user does not make the user feel too bright or too dark.

For a method for determining $Luma_2$, refer to the foregoing method for determining the target luminance. For brevity, details are not described herein again.

Step 205: When the luminance value of the current frame of image is not equal to the target luminance value, converge the luminance value of the current frame of image toward the target luminance value.

After the target luminance value is obtained, it may be determined whether the luminance value of the current frame of image is equal to the target luminance value. If the luminance value of the current frame of image is equal to the target luminance value, it indicates that the luminance value of the current frame of image does not need to be adjusted; or if the luminance value of the current frame of image is not equal to the target luminance value, it indicates that the luminance value of the current frame of image needs to be converged toward the target luminance value.

When the luminance value of the current frame of image is converged toward the target luminance value, a product of t and g in the relational expression (1) may be adjusted, to achieve the objective of converging the luminance value of the current frame of image toward the target luminance value.

For example, the luminance value of the current frame of image is 36. Because the target luminance value is 24, the luminance value of the current frame of image needs to be converged toward the target luminance value. The luminance value of the current frame of image may be converged toward the target luminance value by changing at least one of t and g.

In a process of converging the luminance value of the current frame of image toward the target luminance value by changing at least one of t and g, the luminance level, of the shooting environment, that is determined by using the relational expression (1) is consistent with a luminance level of the shooting environment determined by using the relational expression (1) before the at least one of t and g is changed.

For example, a product of t and g after change is n times a product of t and g before change. Correspondingly, after the product of t and g is changed, the luminance value of the current frame of image is n times a luminance value before the product of t and g is changed. Therefore, it can be seen that a change of the product of t and g and a change of the luminance value of the current frame of image cancel each other, and luminance levels of the shooting environment are consistent before and after the product of t and g is changed.

Therefore, the following conclusion may be drawn: When the aperture is changed, the luminance level, of the shooting environment, that is determined by using the relational expression (1) is consistent with the luminance level, of the shooting environment, that is determined by using the relational expression (1) before the f-number is changed. In addition, in the process of converging the luminance value of the current frame of image toward the target luminance value, the luminance level, of the shooting environment, that is determined by using the relational expression (1) is consistent with a luminance level, of the shooting environment, that is determined by using the relational expression (1) before the convergence.

When each frame of image is obtained, step 201 to step 205 in the method 200 are performed. Therefore, for any two frames of image, luminance levels, of shooting environments, that are determined according to the relational expression (1) are the same, and target luminance values determined based on the luminance levels of the shooting environments are the same. Therefore, for each frame of image, when the image luminance value is not equal to the target luminance value, the image luminance value is converged toward the target luminance value. Therefore, even if the aperture is changed, the luminance of the image seen by the user is always stable, thereby improving visual experience of the user.

It may be understood that, to implement the foregoing functions, the electronic device includes corresponding hardware and/or software modules for performing the functions. Algorithm steps in the examples described with reference to embodiments disclosed in this specification can be implemented by hardware or a combination of hardware and computer software in this application. Whether a function is performed by the hardware or hardware driven by the computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into function modules based on the foregoing method examples. For example, each function module may be obtained through division based on each corresponding function, for example, an obtaining unit and a processing unit, or two or more functions may be integrated into one processing module. The integrated module may be implemented in a form of hardware. It should be noted that module division in this embodiment is an example and is merely logical function division. In practice, there may be another division manner.

It should be noted that all related content of the steps in the foregoing method embodiments may be cited in function description of corresponding functional modules. Details are not described herein.

The electronic device provided in this embodiment is configured to perform the foregoing exposure control method, and therefore can achieve same effect as the foregoing implementation method.

When an integrated unit is used, the electronic device may further include a processing module, a storage module, and a communication module. The processing module may be configured to control and manage an action of the electronic device. The storage module may be configured to support the electronic device to store program code, data, and the like. The communication module may be configured to support communication between the electronic device and another device.

The processing module may be a processor or a controller. The processor may implement or execute various example logical blocks, modules, and circuits described with reference to content disclosed in this application. The processor may also be a combination for implementing computing functions, for example, a combination of one or more microprocessors, a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the electronic device in this embodiment may be a device having the structure shown in FIG. 1.

An embodiment further provides a computer storage medium. The computer storage medium stores computer instructions. When the computer instructions are run on an electronic device, the electronic device is enabled to perform the related method steps, to implement the exposure control method in the foregoing embodiment.

An embodiment further provides a computer program product. When the computer program product runs on a computer, the computer is enabled to perform the foregoing related steps, to implement the exposure control method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the exposure control method in the foregoing method embodiments.

The electronic device, the computer storage medium, the computer program product, or the chip provided in embodiments may be configured to perform the corresponding method provided above. Therefore, for beneficial effects that can be achieved, refer to the beneficial effects of the corresponding method provided above. Details are not described herein again.

Based on the descriptions about the foregoing implementations, a person skilled in the art may understand that, for a purpose of convenient and brief description, division into the foregoing functional modules is used as an example for illustration. In practice, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in practice. For example, a plurality of units or components may be combined or integrated into another apparatus, or some features may be ignored or not performed. In addition, the displayed or discussed mutual couplings or direct couplings or communication connections may be implemented through some interfaces. Indirect couplings or communication connections between the apparatuses or units may be implemented in electrical, mechanical, or other forms.

A unit described as a separate component may or may not be physically separate, and a component displayed as a unit may be one or more physical units, that is, may be located in one place, or may be distributed to different places. Some or all of the units may be selected based on an actual requirement to achieve the objectives of the solutions of embodiments.

In addition, functional units in embodiments of this application may be integrated into one processing unit. Each of the units may alternatively exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, like a USB flash drive, a removable hard disk, a read-only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. An exposure control method, wherein the method is applied to a camera module with a variable aperture, and the method comprises:

   obtaining a current frame of image;
   determining a current f-number of the camera module, and determining a luminance value of the current frame of image;
   determining a luminance level of a shooting environment based on the current f-number, an exposure time corresponding to the current frame of image, the luminance value of the current frame of image, a gain corresponding to the current frame of image, a calibration value of photosensitivity of the camera module, and a corresponding image luminance value when the photosensitivity of the camera module is calibrated;
   determining a target luminance value based on the luminance level of the shooting environment; and
   when the luminance value of the current frame of image is not equal to the target luminance value, converging the luminance value of the current frame of image toward the target luminance value.

2. The method according to claim 1, wherein the determining a current f-number of the camera module comprises:

   obtaining a current zoom ratio of the camera module; and
   determining the current f-number of the camera module based on the current zoom ratio of the camera module.

3. The method according to claim 2, wherein the determining the current f-number of the camera module based on the current zoom ratio of the camera module comprises:

   obtaining a correspondence between a plurality of zoom ratios and a plurality of f-numbers, wherein the plurality of zoom ratios comprise the current zoom ratio; and
   determining an f-number corresponding to the current zoom ratio as the current f-number.

4. The method according to claim 3, wherein the plurality of f-numbers are obtained after the camera module traverses the plurality of zoom ratios under uniform illumination and preset luminance, and an absolute value of a difference between any one of the plurality of f-numbers and a design f-number of an aperture corresponding to the f-number is less than or equal to a preset threshold.

5. The method according to any one of claims 1 to 4, wherein the determining a target luminance value based on the luminance level of the shooting environment comprises:

   obtaining a correspondence between a plurality of luminance levels of the shooting environment and a plurality of luminance values of the image, wherein the plurality of luminance levels of the shooting environment comprise the luminance level of the shooting environment; and
   determining the target luminance value based on an image luminance value corresponding to the luminance level of the shooting environment.

6. The method according to claim 5, wherein the determining the target luminance value based on an image luminance value corresponding to the luminance level of the shooting environment comprises:
   determining the image luminance value corresponding to the luminance level of the shooting environment as the target luminance value.

7. The method according to claim 5, wherein the determining the target luminance value based on an image luminance value corresponding to the luminance level of the shooting environment comprises:

   determining a correction factor based on a grayscale histogram of the current frame of image;
   correcting, based on the correction factor, the image luminance value corresponding to the luminance level of the shooting environment; and
   determining a corrected image luminance value as the target luminance value.

8. An electronic device, wherein the electronic device comprises:

a camera module, configured to obtain a current frame of image; and
one or more processors, a memory, a plurality of application programs, and one or more programs, wherein the one or more programs are stored in the memory; and when the one or more programs are executed by the processor, the electronic device is enabled to perform the following steps:

determining a current f-number of the camera module, and determining a luminance value of the current frame of image;
determining a luminance level of a shooting environment based on the current f-number, an exposure time corresponding to the current frame of image, the luminance value of the current frame of image, a gain corresponding to the current frame of image, a calibration value of photosensitivity of the camera module, and a corresponding image luminance value when the photosensitivity of the camera module is calibrated;
determining a target luminance value based on the luminance level of the shooting environment; and
when the luminance value of the current frame of image is not equal to the target luminance value, converging the luminance value of the current frame of image toward the target luminance value.

9. The electronic device according to claim 8, wherein when the one or more programs are executed by the processor, the electronic device is enabled to perform the following steps:

obtaining a current zoom ratio of the camera module; and
determining the current f-number of the camera module based on the current zoom ratio of the camera module.

10. The electronic device according to claim 9, wherein when the one or more programs are executed by the processor, the electronic device is enabled to perform the following steps:

obtaining a correspondence between a plurality of zoom ratios and a plurality of f-numbers, wherein the plurality of zoom ratios comprise the current zoom ratio; and
determining an f-number corresponding to the current zoom ratio as the current f-number.

11. The electronic device according to claim 10, wherein the plurality of f-numbers are obtained after the camera module traverses the plurality of zoom ratios under uniform illumination and preset luminance, and an absolute value of a difference between any one of the plurality of f-numbers and a design f-number of an aperture corresponding to the f-number is less than or equal to a preset threshold.

12. The electronic device according to claims 8 to 11, wherein when the one or more programs are executed by the processor, the electronic device is enabled to perform the following steps:

obtaining a correspondence between a plurality of luminance levels of the shooting environment and a plurality of luminance values of the image, wherein the plurality of luminance levels of the shooting environment comprise the luminance level of the shooting environment; and
determining the target luminance value based on an image luminance value corresponding to the luminance level of the shooting environment.

13. The electronic device according to claim 12, wherein when the one or more programs are executed by the processor, the electronic device is enabled to perform the following step:
determining the image luminance value corresponding to the luminance level of the shooting environment as the target luminance value.

14. The electronic device according to claim 12, wherein when the one or more programs are executed by the processor, the electronic device is enabled to perform the following steps:

determining a correction factor based on a grayscale histogram of the current frame of image;
correcting, based on the correction factor, the image luminance value corresponding to the luminance level of the shooting environment; and
determining a corrected image luminance value as the target luminance value.

15. A computer storage medium, comprising computer instructions, wherein when the computer instructions are run on an electronic device, the electronic device is enabled to perform the exposure control method according to any one of claims 1 to 7.

16. A computer program product, wherein when the computer program product runs on a computer, the computer is enabled to perform the exposure control method according to any one of claims 1 to 7.

Electronic device 100

Antenna 1    Antenna 2

| Mobile communication module 2G/3G/4G/5G [150] | Wireless communication module BT/WLAN/GNSS/NFC/IR/FM [160] |

| Speaker [170A] | | |
| Receiver [170B] | Audio module [170] | |
| Microphone [170C] | | |
| Headset jack [170D] | | |

Displays 1 to N [194]

Cameras 1 to N [193]

Indicator [192]

Motor [191]

Button [190]

Internal memory [121]

SIM card interfaces 1 to N [195]

External memory interface [120]

Processor [110]

USB interface [130]

Charging input

Charging management module [140]

Power management module [141]

Battery [142]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 1

200

```
┌─────────────────────────────────────────────────────┐
│          Obtain a current frame of image            │ ── Step 201
└─────────────────────────────────────────────────────┘
                          │
                          ▼
┌─────────────────────────────────────────────────────┐
│ Determine a current f-number of a camera module, and determine │
│      a luminance value of the current frame of image      │ ── Step 202
└─────────────────────────────────────────────────────┘
                          │
                          ▼
┌─────────────────────────────────────────────────────┐
│ Determine a luminance level of a shooting environment based on │
│   the current f-number, an exposure time corresponding to the  │
│  current frame of image, the luminance value of the current frame │
│   of image, a gain corresponding to the current frame of image, a │
│  calibration value of photosensitivity of the camera module, and a │ ── Step 203
│ corresponding image luminance value when the photosensitivity │
│        of the camera module is calibrated         │
└─────────────────────────────────────────────────────┘
                          │
                          ▼
┌─────────────────────────────────────────────────────┐
│ Determine a target luminance value based on the luminance level │
│           of the shooting environment           │ ── Step 204
└─────────────────────────────────────────────────────┘
                          │
                          ▼
┌─────────────────────────────────────────────────────┐
│ When the luminance value of the current frame image is not equal │
│ to the target luminance value, converge the luminance value of the │ ── Step 205
│    current frame of image toward the target luminance value    │
└─────────────────────────────────────────────────────┘
```

FIG. 2

Aperture Night Portrait Photo Video Pro More

FIG. 3

FIG. 4

FIG. 5

## INTERNATIONAL SEARCH REPORT

International application No.

**PCT/CN2022/113963**

| A. | CLASSIFICATION OF SUBJECT MATTER |
| --- | --- |

H04N 5/232(2006.01)i

According to International Patent Classification (IPC) or to both national classification and IPC

| B. | FIELDS SEARCHED |
| --- | --- |

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; USTXT; JPTXT; WOTXT; EPTXT; CNKI; IEEE: 曝光, 光圈, 变焦, 调焦, 倍率, 亮度, 场景, 环境, 光强, 快门, 增益, 感光度, 目标, 收敛, 差值, camera, exposure, aperture, focus, luminance, brightness, light intensity, environment, scene, shutter, ISO, target, convergence, difference

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 109936698 A (HANGZHOU HIKVISION DIGITAL TECHNOLOGY CO., LTD.) 25 June 2019 (2019-06-25) description, paragraphs [0107]-[0236] and figures 1-11 | 1-16 |
| Y | CN 112565636 A (YINGSHI INNOVATION TECHNOLOGY CO., LTD.) 26 March 2021 (2021-03-26) description, paragraphs [0075]-[0214], and figures 1-10 | 1-16 |
| Y | CN 110971833 A (BEIJING MICROLIVE VISION TECHNOLOGY CO., LTD.) 07 April 2020 (2020-04-07) description, paragraphs [0061]-[0128], and figures 1-11 | 1-16 |
| A | CN 112335228 A (SZ DJI TECHNOLOGY CO., LTD.) 05 February 2021 (2021-02-05) entire document | 1-16 |
| A | JP 2009118012 A (CANON K. K.) 28 May 2009 (2009-05-28) entire document | 1-16 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 November 2022** | **15 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 109936698 | A | 25 June 2019 | CN | 109936698 | B | 02 July 2021 |
| CN | 112565636 | A | 26 March 2021 | WO | 2022116989 | A1 | 09 June 2022 |
| CN | 110971833 | A | 07 April 2020 | US | 2021211566 | A1 | 08 July 2021 |
| | | | | WO | 2020062749 | A1 | 02 April 2020 |
| | | | | CN | 110971833 | B | 14 May 2021 |
| | | | | US | 11258954 | B2 | 22 February 2022 |
| CN | 112335228 | A | 05 February 2021 | WO | 2021097848 | A1 | 27 May 2021 |
| JP | 2009118012 | A | 28 May 2009 | | None | | |

Form PCT/ISA/210 (patent family annex) (January 2015)

**REFERENCES CITED IN THE DESCRIPTION**

**Patent documents cited in the description**

- CN 202111073455